# EUROPEAN PATENT APPLICATION

(11) **EP 3 733 965 A1**
(43) Date of publication of application: **04.11.2020**
(21) Application number: 18895615.5
(22) Date of filing: 30.10.2018
(51) Int. Cl.: D21H 11/04, D21H 17/28, D21F 11/12, B32B 29/08

(54) **KRAFTLINER PAPER MADE OF SHORT CHEMICAL FIBRES**

(30) Priority: 28.12.2017 BR 102017028522
(71) Applicant: KLABIN S/A, 4552-000 Itaim Bibi - São Paulo (BR)
(72) Inventor: DA SILVA, Juliana Cristina, 84274-000 Harmonia Telêmaco Borba (BR); VIEIRA, Osvaldo, 84275-000 Harmonia Telêmaco Borba (BR); TORRES, Fernando Inácio, 84275-000 Harmonia Telêmaco Borba (BR); SILVA FRANCO DA QUINTA, Ricardo, 84275-000 Harmonia Telêmaco Borba (BR)
(74) Representative: Kramer Barske Schmidtchen Patentanwälte PartG mbB
(86) International application number: PCT/BR2018/050397
(87) International publication number: WO 2019/126848

(57) **Abstract**

The present invention relates to the production of a kraftliner paper in a one to three layer construction, with a short chemical fiber composition ranging from 70% to 100%, and the remaining fraction completed with long chemical fiber. Preferably, to solve quality and cost problems, production with 100% short eucaliptus chemical fiber and surface application of 0-30 Kg starch/t paper is maximized. The present invention further relates to the box produced with the disclosed paper.

## Description

### TECHNICAL FIELD

The present invention relates to the production of a kraftliner paper in a one to three layer construction, with a short chemical fiber composition ranging from 70% to 100%, and the remaining fraction completed with long chemical fiber.

### BACKGROUND OF THE INVENTION.

The term kraftliner paper is widely used in the international market and is defined as paper or cardboard with no less than 80% fiber obtained by the sulfate or soda process.

Thus, kraftliner papers are produced from mixtures of chemical fibers (long fibers and short fibers). The pulp composition depends on the quality requirements of the paper, and the grammage of the resulting paper can range from 70 to 440 g/m².

Kraftliner papers play an important role in corrugated cardboard boxes, as they take part in their composition and help to define their properties. As these boxes protect their contents from impacts during handling, transportation, storage, stacking load, extreme temperatures and humidity, kraftliner paper has to meet general strength requirements such as: tensile strength, bursting resistance, compressive strength and *ply bond*, and provide adequate porosity. The paper should also have good printing quality.

Bursting resistance is considered a general indicator of product strength and is associated with stiffness and rupture stress. In practice, it is the hydrostatic pressure necessary to break the product when it is subjected to a constant and uniformly distributed force, applied on one of its sides.

On the other hand, tear strength is the force required to tear the product at a fixed distance after tearing has started. The product has greater tear strength in the direction perpendicular to the fibers (transverse) and the longer the fiber, the greater is the tear strength.

Gurley porosity, or air permeance is the difficulty with which a gas volume passes through a sheet under a pressure gradient and depends on the number, size, shape and distribution of pores in the material. This property is indirectly related to sheet formation, paper strength, and penetration of printing inks into the paper. It is important for certain uses of paper, such as for packaging, bags and pouches.

The compressive strength of paper is the property of kraftliner paper to resist to the compression applied parallel to the sheet plane and is responsible, for example, for the performance of a box during its normal use, that is, from the moment of positioning the content to the delivery of the product to the final consumer. It can be assessed by both SCT (***S**hort-span **C**ompression **T**est*), and RCT (***R**ing **C**rush **T**est*). These two test methods are not interchangeable but complementary, since they measure different compressive strength properties, affected by the manufacturing process.

The term "*ply bond*" refers to the determination of the internal cohesion of the paper sheet, generated by the bonding between the fibers, which avoid the separation of layers of a multilayer paper.

Typical applications for kraftliner include: food, beverages, cosmetics, electronics, hygiene and cleaning, horticulture products and flowers, electrical materials, chemicals and derivatives, clothing and footwear, glass and ceramics.

Document BR 11 2016 006857-2 discloses a multilayer cardboard comprising cellulosic fiber pulp, in which 100% of the total fiber content of said cardboard is formed by hardwood fibers. The document further discloses that the cardboard under discussion may also include dry force additives, such as starch. However, the application of starch is not superficial and the paper discloses presents at least three layers.

Patent application BR 11 2017 010500-4 refers to a method to produce a load composition that will be used in the production of paper or cardboard, in which starch and/or carboxymethylcellulose is added to the calcium hydroxide suspension during carbonation. However, this document is directed to a method of producing a filler to be used in the production of paper or cardboard and not to the paper itself.

Patent application PI 0918112-1 discloses the use of a novel strength agent in the papermaking process, such as hydrophobic starch. In addition to being more focused on the starch itself and not on paper, the application of starch, according to this document, is not superficial.

However, until then, the state of the art is deficient in disclosing a kraftliner paper with all the qualities of the paper described in the present invention. This is due to the fact that, currently, a kraftliner paper with better quality (in terms of strength) is produced in machines with one to three layers construction, with 100% long chemical fiber. This better physical-mechanical resistance is provided by the better bonding between fibers.

Although the paper of the state of the art performs well in the box conversion step, this paper has the following shortcomings:
- Sheet formation is not good and presents dark and light spots or flocculated appearance that can influence physical-mechanical properties;
- The sheet surface is rougher and impacts directly on the printing quality;
- Occurrence of holes in the sheet structure; and
- The cost of this paper is less efficient, that is, its production cost is high.

### SUMMARY OF THE INVENTION

The present invention, which deals with the use of short chemical fiber, preferably eucalyptus short fiber, aims to provide an exceptional quality kraftliner paper consisting of one to three layers of long and short chemical fibers. The focus on developing a kraftliner paper with higher content of short eucalyptus fiber is due to the goal of having a product with better quality and lower cost.

With this paper, the instant invention presents a novel solution to technical problems faced, since the kraftliner paper of the present invention provides:
- Improved sheet formation, as the use of this type of fiber reduces the flocculated appearance;
- Reduction of roughness of the sheet surface, improving the quality of printing;
- Filling of empty spaces between fibers, reducing the risk of the occurrence of punctures;
- Reduction of paper cost, making the product more competitive; and
- Improvement in the physical-mechanical properties of the paper with surface application of starch.

### DETAILED DESCRIPTION

The present invention refers to a kraftliner paper in a one to three layer construction, composed of both long chemical fibers and short chemical fibers.

In an additional embodiment of the present invention, the short chemical fibers present in the kraftliner paper composition are short eucalyptus fibers.

The physical-mechanical properties of short eucalyptus chemical fibers are inferior to those of long chemical fibers. Thus, the present invention explored the alternative of the surface coating with starch.

In a preferred embodiment of the present invention, a starch layer is applied on the paper surface to compensate for losses of physical-mechanical resistance when the fraction of long fiber in the composition is reduced. Thus, the kraftliner paper of the present invention is preferably composed of 100% short fibers, with a layer of starch applied superficially.

Preferably, starch is applied in an amount of 0 to 30 kg starch/t paper.

The total replacement of long fiber by short fiber, with surface application of starch, results in a product with excellent formation and quality with regard to: bursting resistance, tensile strength, tear strength, Gurley porosity, SCT (***S**hort-span **C**ompression **T**est*), RCT (***R**ing **C**rush **T**est*) and printing.

The results were surprising and the paper produced only with short eucalyptus chemical fibers presented physical-mechanical properties superior to papers produced with long chemical fibers in its composition, used as reference. This is totally unexpected and provided by coating the paper with surface starch.

### EXAMPLE

In order to assess the kraftliner paper of the present invention, a series of industrial tests were carried out comparing the paper composed of 100% of short eucalyptus chemical fibers with a reference paper, produced in a one-layer paper machine, consisting of 75% of short chemical fiber of eucalyptus and 25% of long chemical fiber. All tests were performed in a paper machine with two layers and superficial application of starch.

Both the reference papers and the present invention were converted into boxes and presented the same performance in terms of quality.

The ranges of physical-mechanical properties of short eucalyptus chemical fibers that are acceptable for use in the production of kraftliner paper of the present invention are shown in table 1.

**Table 1 - Physical-Mechanical Properties of Short Chemical Fibers (Presented as an index to exclude influence of sheet weight)**

| **Physical-Mechanical Property** | **Limits** |
|---|---|
| Fiber length (mm) | 0.80-1.00 |
| Width (µm) | 21.0-24.0 |
| Fines (%) | 8.0-11.0 |
| Kappa number (mL KMnO₄/g) | 60.0-110.0 |
| °SR | 20-40 |
| Tensile index (N.m/g) | 38.0-60.0 |
| Tear index (mN.m²/g) | 5.5-9.0 |
| Burst index (kPa.m²/g) | 1.8-3.8 |

All tests to determine the physical and mechanical properties of kraftliner paper were performed according to the methods and standards listed in table 2 below, after conditioning in an air-conditioned environment at a temperature of 23 °C and 50% relative humidity.

**Table 2 - Patterns and Testing Methods Used**

| **Physical-Mechanical Property** | **Pattern** |
|---|---|
| Bursting resistance (kPa) | TAPPI T-807 |
| SCT (kN/m) | TAPPI T-826 |
| RCT (kN/m) | TAPPI T-818 |
| Gurley porosity (s/dL) | TAPPI T-460 |
| Formation index (g/m²) | Internal Klabin Standard* - AMBERTEC Equipment |

| | |
|---|---|
| *The test is performed on AMBERTEC equipment and consists of measuring variations of grammage, on a small scale, in 400 sample points of 70 x 70 mm. | |

### Short eucalyptus chemical fibers

In the production of the paper of the present invention, short eucalyptus chemical fibers were used, whose most important physical-mechanical properties are shown in table 3.

**Table 3 - Physical-mechanical Properties of short chemical fibers**

| **Physical-Mechanical Property** | **Value** |
|---|---|
| Kappa number (mL KMnO₄/g) | 99.2 |
| °SR | 30 |
| Tensile index (N.m/g) | 52.5 |
| Tear index (mN.m²/g) | 7.1 |
| Burst index (kPa.m²/g) | 3.5 |

### Kraftliner paper with 100% eucalyptus short chemical fiber

The kraftliner papers of the present invention were produced in accordance with the following steps:
- preparation of unbleached chemical pulps from long and short fibers (pine and eucalyptus);
- feeding these fibers, as a suspension, on a table forming sheet, where occurs one partial dewatering; and
- subsequent pressing and drying for removing residual water.

After the steps described above, the dried sheet was rolled up and converted into coils of specified sizes. The kraftliner papers of the present invention were produced in grammages from 90 to 185 g/m².

The results of the most important physical-mechanical properties of kraftliner paper with 100% short eucaliptus chemical fiber in a grammage of 135 g/m², with and without application of surface starch (0-30 kg starch/t paper), and the reference paper, are shown in table 4. The paper used as a reference was KlaLiner Paper, produced and marketed by Klabin, which has short and long fibers in its composition.

**Table 4 - Physical-mechanical properties of kraftliner paper with 100% short eucalyptus chemical fiber in a grammage of 135 g/m², with and without application of surface starch, and the reference KLALINER PAPER.**

| **Property/configuration** | **With surface starch** | **Without surface starch** | **Reference (KlaLiner Paper)** |
|---|---|---|---|
| Bursting resistance (kPa) | 591 | 470 | 491 |
| SCT (kN/m) | 3.32 | 2.50 | 2.66 |
| RCT (kN/m) | 1.91 | 1.40 | 1.59 |
| Gurley porosity (s/dL) | > 30 | 21 | 39 |
| Formation index (g/m²) AMBERTEC | 0.69 | | 0.78 |

| | | | |
|---|---|---|---|
| *Fibrous composition composed of at least 50% long fiber. | | | |

From the data presented in table 4, it is possible to observe that the comparison of the main properties of bursting resistance, SCT and RCT of the kraftliner paper with surface starch of the present invention with the reference paper demonstrates increases of 20%, 25% and 20%, respectively, for the paper of the present invention. These results demonstrate the level of excellence of the kraftliner paper produced with 100% short eucaliptus chemical fibers.

By comparing the kraftliner paper produced with 100% short chemical fibers with and without application of superficial starch, the importance of this operation in the physical-mechanical properties of this product becomes evident.

Also, the formation index of the kraftliner paper of this invention is better than the reference kraftliner paper, this property being 11.5% lower. It is noteworthy that the lower the value of the formation index, the smaller the variation in the sheet grammage and the better the formation of paper.

Tests for assessing the physical-mechanical properties were carried out for kraftliner paper with 100% short eucaliptus chemical fiber in other grammages, with and without application of surface starch, and the most important results of these grammages are presented in table 5 below.

**Table 5 - Physical-mechanical properties of kraftliner paper with 100% short eucaliptus chemical fiber in additional grammages, with and without application of surface starch.**

| **Property/con figuration** | **152 g/m² with surface starch** | **172 g/m² with surface starch** | **174 g/m² with surface starch** | **173 g/m² without surface starch** |
|---|---|---|---|---|
| Bursting resistance (kPa) | 561 | 589 | 659 | 502 |
| SCT (kN/m) | 4.19 | 4.81 | 4.58 | 3.58 |
| RCT (kN/m) | 2.18 | 2.59 | 2.78 | 2.31 |
| Gurley porosity (s/dL) | 131 | 67 | 66 | 65 |
| Formation index (g/m²) AMBERTEC | 0.835 | 0.989 | 1.051 | - |

As noted in table 5, the kraftliner paper with 100% short fibers with application of surface starch of the present invention has excellent physical-mechanical properties over a wide range of grammages.

## Claims

1. Short chemical fiber kraftliner paper, produced in a paper machine, **characterized by** comprising a fibrous composition, based on dry mass, of:
70 to 100% short chemical fiber; and
up to 30% long chemical fiber.

2. Kraftliner paper, according to claim 1, **characterized in that** it comprises 100% short chemical fiber.

3. Kraftliner paper, according to claim 1 or 2, **characterized in that** the short chemical fiber is of eucalyptus.

4. Kraftliner paper, according to any of claims 1-3, **characterized in that** it further comprises surface application of starch on the paper.

5. Kraftliner paper, according to claim 4, **characterized in that** the surface application of starch is 0-30 Kg starch/t of paper.

6. Kraftliner paper, according to any one of claims 1-5, **characterized in that** it comprises from one to three layers.

7. Kraftliner paper, according to any one of claims 1-5, **characterized in that** it has a grammage of 90-185 g/m².

8. Box, **characterized in that** it is produced with the kraftliner paper as defined in any one of claims 1-7.
